# NEUE EUROPÄISCHE PATENTSCHRIFT

(11) **EP 2 049 699 B2**
(45) Veröffentlichungstag und Bekanntmachung des Hinweises auf die Entscheidung über den Einspruch: **03.07.2013**
(45) Hinweis auf die Patenterteilung: 16.12.2009
(21) Anmeldenummer: 06707959.0
(22) Anmeldetag: 01.02.2006
(51) Int. Cl.: C22C 38/00

(54) **VERFAHREN ZUM BESCHICHTEN VON STAHLBÄNDERN UND BESCHICHTETES STAHLBAND**
METHOD FOR STEEL STRIP COATING AND A STEEL STRIP PROVIDED WITH SAID COATING
PROCEDE POUR REVETIR DES RUBANS D'ACIER, ET RUBAN D'ACIER POURVU D'UN REVETEMENT

(30) Priorität: 24.02.2005 DE 102005008410
(43) Veröffentlichungstag der Anmeldung: 22.04.2009
(73) Patentinhaber: ThyssenKrupp Steel Europe AG, 47166 Duisburg (DE)
(72) Erfinder: HOFMANN, Harald, 44357 Dortmund (DE); SCHUHMACHER, Bernd, 44227 Dortmund (DE); MEURER, Manfred, 47495 Rheinberg (DE); TOPALSKI, Slavcho, 44225 Dortmund (DE)
(74) Vertreter: Cohausz & Florack
(86) Internationale Anmeldenummer: PCT/EP2006/050597
(87) Internationale Veröffentlichungsnummer: WO 2006/089832

(56) Entgegenhaltungen:
- WO-A-2004/055223
- DE-A1- 19 900 199
- GB-A- 966 664
- GB-A- 2 122 650
- US-A1- 2003 155 048
- LAMPMAN E A ED - LAMPMAN S R ET AL AMERICAN SOCIETY FOR METALS: "ASM handbook" ASM HANDBOOK. SURFACE ENGINEERING, ASM HANDBOOK (FORMERLY METALS HANDBOOK), METALS PARK, ASM INTERNATIONAL, US, Bd. VOL. 5, 1994, Seiten 345-346, XP002176860 ISBN: 0-87170-384-X

## Beschreibung

Die Erfindung betrifft ein Verfahren zum Beschichten von Stahlbändern mit (in Gew.-%) C: ≤ 1,6 %, Mn: 6 - 30 %, Al: ≤ 10 %, Ni: ≤ 10 %, Cr: ≤ 10 %, Si: ≤ 8 %, Cu: ≤3 %, Nb: ≤ 0,6 %, Ti: ≤ 0,3 %, V: ≤ 0,3 %, P: ≤ 0,1 %, B: ≤ 0,01 %, N: ≤ 1,0 %, Rest Eisen und unvermeidbare Verunreinigungen, bei dem das Stahlband einer letzten Glühung unterzogen und anschließend mit einem aus einem schmelzflüssigen Metall gebildeten Überzug beschichtet wird. Darüber hinaus betrifft die Erfindung ein Stahlband, das ein entsprechend zusammengesetztes Grundmaterial und einen darauf aufgetragenen metallischen Überzug aufweist. Abhängig von den von dem Überzug geforderten Eigenschaften besteht dieser Überzug dabei insbesondere aus einer Aluminium/Silizium-Legierung, aus reinem Aluminium, reinem Zink oder einer Zinklegierung.

Stähle mit hohen Mangan-Gehalten eignen sich aufgrund ihrer günstigen Eigenschaftskombination aus hohen Festigkeiten von bis zu 1.400 MPa einerseits und extrem hohen Dehnungen (Gleichmaßdehnungen bis zu 70 % und Bruchdehnungen bis zu 90 %) andererseits grundsätzlich im besonderen Maße für die Verwendung im Bereich des Fahrzeugbaus, insbesondere im Automobilbau. Für diesen Einsatzzweck besonders geeignete Stähle mit hohen Mn-Gehalten von 7 Gew.-% bis 30 Gew.-% sind beispielsweise aus der DE 102 59 230 Al, der DE 197 27 759 C2, der GB2122650 oder DE 199 00 199 A1 bekannt. Aus diesen Stählen erzeugte Flachprodukte weisen bei hohen Festigkeiten ein isotropes Verformungsverhalten auf und sind darüber hinaus tieftemperaturduktil.

Diesen Vorteilen steht jedoch gegenüber, dass Stähle mit höheren Mn-Gehalten zu Lochfraß neigen und nur schwer zu passivieren sind. Diese im Vergleich zu niedriger legierten Stählen bei Einwirken erhöhter Chloridionen-Konzentrationen große Neigung zu lokal begrenzter, jedoch intensiver Korrosion macht die Verwendung von zur Werkstoffgruppe der hochlegierten Stahlbleche gehörenden Stählen schwierig. Zudem neigen hochmanganhaltige Stähle zu Flächenkorrosion, die das Spektrum ihrer Verwendung ebenfalls einschränkt.

Daher ist vorgeschlagen worden, auch Stahlflachprodukte, die aus hochmanganhaltigen Stählen erzeugt sind, in an sich bekannter Weise mit einem metallischen Überzug zu versehen, die den Stahl vor korrosivem Angriff schützt. Zu diesem Zweck ist versucht worden, auf das Stahlmaterial auf elektrolytischem Wege eine Zinkbeschichtung aufzutragen. Diese Versuche haben zwar zu zinkbeschichteten Bändern geführt, deren Grundmaterial jeweils aus dem hochlegierten Stahl bestehen kann, das durch die aufgetragene metallische Beschichtung gegen Korrosion geschützt ist. Allerdings zeigte sich, dass beim Verschweißen derartiger Bleche Probleme im Bereich der Schweißzone auftreten, die in der Fachwelt unter dem Begriff "Lötbrüchigkeit" bekannt sind. In Folge des Schweißens kommt es im Grundmaterial zu einer Infiltration der Korngrenzen durch verflüssigtes Zinkmaterial des Überzugs. Diese Infiltration bewirkt, dass das Material im Umfeld der Schweißzone seine Festigkeit und Duktilität in einem Maße verliert, dass die Schweißverbindung bzw. das an die Schweißverbindung angrenzende Blech insgesamt nicht mehr die an die Belastbarkeit gestellten Anforderungen erfüllt.

Versuche, ausreichend korrosionsbeständige und gleichzeitig gut schweißbare Bleche durch die an sich bekannten Verfahren der Schmelztauchbeschichtung zu erzeugen, blieben erfolglos, weil hochlegierte Stahlbänder, insbesondere solche mit Mn-Gehalten von mehr als 6 Gew.-%, bei der für die Wirksamkeit der Schmelztauchbeschichtung unverzichtbaren Glühung zu einer starken Oberflächenoxidation neigen. Die derart oxidierten Blechoberflächen lassen sich nicht mehr mit der erforderlichen Gleichmäßigkeit und Vollständigkeit mit dem Überzugsmetall benetzen, so dass das Ziel eines flächendeckenden Korrosionsschutzes auf diesem Weg nicht erzielt werden kann.

Die aus dem Bereich von hochlegierten, jedoch niedrigere Mn-Gehalte aufweisenden Stählen bekannten Möglichkeiten der Verbesserung der Benetzbarkeit durch Aufbringen einer Zwischenschicht aus Fe oder Ni führten bei Stahlblechen mit mindestens 6 Gew.-% Mangan nicht zu dem gewünschten Erfolg.

Ausgehend von dem voranstehend erläuterten Stand der Technik bestand die Aufgabe der Erfindung darin, ein Verfahren anzugeben, das es ermöglicht, auch solche Stahlbänder mit einem eine hervorragende Korrosionsbeständigkeit und gute Schweißeigenschaften gewährleistenden metallischen Überzug zu versehen, die sich bisher nur unzureichend beschichten ließen. Darüber hinaus sollte ein beschichtetes Stahlband angegeben werden, das sich ohne die Gefahr von Lötbrüchigkeit gut verschweißen lässt.

In Bezug auf das Verfahren ist diese Aufgabe dadurch gelöst worden, dass beim Beschichten von Stahlbändern, die (in Gew.-%) C: ≤ 1,6 %, Mn: 6 - 30 %, Al: ≤ 10 %, Ni: ≤ 10 %, Cr: ≤ 10 %, Si: ≤ 8 %, Cu: ≤ 3 %, Nb: ≤ 0,6 %, Ti: ≤ 0,3 %, V: ≤0,3 %, P: ≤ 0,1 %, B: ≤ 0,01 %, Rest Eisen und unvermeidbare Verunreinigungen aufweisen, bei dem das Stahlband einer letzten Glühung unterzogen und anschließend mit einem aus einem schmelzflüssigem Metall gebildeten Überzug beschichtet wird, erfindungsgemäß auf das Stahlband vor dem letzten Glühen eine Aluminiumschicht aufgetragen wird, auf die nach dem letzten Glühen der Überzug aufgebracht wird.

Gemäß der Erfindung wird vor dem Auftrag des die eigentliche Korrosionsschutzschicht bildenden metallischen Überzugs auf dem das Grundmaterial darstellenden Stahlband eine dünne Aluminiumschicht aufgetragen.

Bei der der anschließenden Schmelzbeschichtung notwendig vorgeschalteten Glühbehandlung kommt es zu einer Diffusion des Eisens des Stahlbands in das erfindungsgemäß aufgetragene Aluminium, so dass im Zuge der Glühung auf dem Stahlband eine metallische, im Wesentlichen aus Al und Fe bestehende Auflage entsteht, die stoffschlüssig mit dem durch das Stahlband gebildeten Untergrund verbunden ist. Das auf dem Stahlband haftende Aluminium verhindert bei der der Schmelzbeschichtung vorgeschalteten Glühung des Stahlbands, dass dessen Oberfläche oxidiert. Anschließend bewirkt die Aluminium-Schicht nach Art eines Haftvermittlers, dass der durch die Schmelzbeschichtung erzeugte Überzug auch dann fest und vollflächig auf dem Stahlband haftet, wenn das Stahlband selbst aufgrund seiner Legierung dazu ungünstige Voraussetzungen bietet.

Überraschend hat sich darüber hinaus ergeben, dass die erfindungsgemäß zwischen dem Stahlband und dem Überzug aufgebrachte Al-Schicht neben den bereits erwähnten Effekten den Vorteil hat, dass sie beim Verschweißen von erfindungsgemäß beschichteten Blechen der beim Stand der Technik gefürchteten Lötbrüchigkeit entgegenwirkt. So verhindert die Al-Schicht in Kombination mit dem anschließend aufgetragenen Überzug, dass Werkstoff des metallischen Überzugs beim Schweißen in einer Weise in das Gefüge des Stahlwerkstoffs eindringt, dass dessen Festigkeit oder Duktilität nachhaltig beeinträchtigt wird. Die erfindungsgemäße Vorgehensweise bei der Beschichtung von Stahlband ermöglicht es so, auch solche Stahlbänder mit einer metallischen, gegen Korrosion schützenden Deckschicht zu versehen, die sich mit den bekannten Methoden nur unzureichend beschichten lassen.

Der Auftrag der Al-Zwischenschicht erfolgt bevorzugt mittels des an sich bekannten PVD-Beschichtungsverfahrens (PVD = Physical Vapor Deposition), bei dem Aluminium verdampft wird und der entstehende Aluminiumdampf unter Vakuum auf dem zu beschichtenden Stahlband kondensiert wird, so dass sich dort das Aluminium als dünne Schicht abscheidet. Die Dicke der auf das Stahlband durch PVD-Beschichten aufgebrachten Aluminium-Schicht lässt sich dabei über die Menge des Aluminiumdampfes regulieren.

Das erfindungsgemäße Verfahren eignet sich gleichermaßen zur Beschichtung von Stahlbändern, die im warmgewalzten oder kaltgewalzten Zustand vorliegen.

Eine ausreichende Wirkung der erfindungsgemäßen Beschichtung ist dann stets sichergestellt, wenn die Schichtdicke der Aluminiumzwischenschicht 50 nm bis 1000 nm beträgt.

Die erfindungsgemäße Vorgehensweise bei der Beschichtung ist insbesondere für solche Stahlbänder geeignet, die hoch legiert sind, um hohe Festigkeiten und gute Dehnungseigenschaften zu gewährleisten. So lässt sich mit der Erfindung ein Stahlband erzeugen, das ein Stahl-Grundmaterial mit (in Gew.-%) C: ≤ 1,6 %, Mn: 6 - 30 %, Al: ≤ 10 %, Ni: ≤ 10 %, Cr: ≤ 10 %, Si: ≤ 8 %, Cu: ≤ 3 %, Nb: ≤0,6 %, ≤Ti: ≤ 0,3 %, V: ≤ 0,3 %, P: ≤ 0,1 %, B: ≤ 0,01 %, Rest Eisen und unvermeidbare Verunreinigungen und eine darauf aufgetragene metallische Beschichtung aufweist, wobei zwischen dem Grundmaterial und der metallischen Beschichtung eine Zwischenschicht gebildet ist, die im Wesentlichen aus Al und Fe besteht. Da so erzeugte beschichtete Stahlblechprodukt weist eine optimierte Korrosionsbeständigkeit bei gleichzeitig guter Schweißeignung auf.

Dabei treten die durch die Erfindung erzielten Effekte dann besonders sicher ein, wenn die Dicke der Zwischenschicht 50 nm bis 1000 nm beträgt.

Besonders vorteilhaft wirken sich die durch die Erfindung erzielten Effekte bei der Beschichtung von hochlegierten Stahlbändern aus, die Mangan-Gehalte von mindestens 6 Gew.-% enthalten. So zeigt sich, dass ein Stahlgrundmaterial, welches (in Gew.-%) C: ≤ 1,00 %, Mn: 20,0 - 30,0 %, Al: ≤ 0,5 %, Si: ≤ 0,5 %, B: ≤ 0,01 %, Ni: ≤ 3,0 %, Cr: ≤ 10, 0 %, Cu: ≤ 3,0 %, N: < 0,6 %, Nb: < 0,3 %, Ti: < 0,3 %, V: < 0,3 %, P: < 0,1 %, Rest Eisen und unvermeidbare Verunreinigungen enthält, sich besonders gut mit einem vor Korrosion schützenden Überzug beschichten lässt, wenn es zuvor in erfindungsgemäßer Weise mit einer Al-Zwischenschicht versehen wird. Gleiches gilt, wenn ein Stahl als Grundmaterial eingesetzt wird, der (in Gew.-%) C: ≤ 1,00 %, Mn: 7,00 - 30,00 %, Al: 1,00 - 10,00 %, Si: >2,50 - 8,00 % (wobei gilt, dass die Summe aus Al-Gehalt und Si-Gehalt >3,50 - 12,00 % ist), B: < 0,01 %, Ni: < 8,00 %, Cu: < 3,00 %, N: < 0,60 %, Nb: < 0,30 %, Ti: < 0,30 %, V: < 0,30 %, P: < 0,01 %, Rest Eisen und unvermeidbare Verunreinigungen enthält.

Gerade für solche hochmanganhaltigen Stahlbänder hat die Erfindung einen Weg gezeigt, der es ermöglicht, diese Stahlbänder auf wirtschaftliche Weise so gegen Korrosion zu schützen, dass sie für die Produktion von Karosserien für den Fahrzeugbau, insbesondere den Automobilbau, eingesetzt werden können, bei deren praktischem Einsatz sie besonders korrosiven Medien ausgesetzt sind.

Wie bei der üblichen Schmelztauchbeschichtung können sowohl warmgewalzte als auch kaltgewalzte Stahlbänder in erfindungsgemäßer Weise beschichtet werden.

Insbesondere dann, wenn hochmanganhaltige Stahlbänder in erfindungsgemäßer Weise beschichtet werden sollen, hat es sich als günstig erwiesen, wenn die Glühtemperatur beim nach dem Auftrag der Zwischenschicht durchgeführten Glühen mehr als 680 °C und höchstens 900 °C beträgt. In diesem Temperaturbereich tritt die angestrebte Diffusion des Eisens des Stahlbands in die zuvor aufgetragene Beschichtung besonders sicher ein, so dass der stoffschlüssige Halt der Beschichtung auf der durch das Stahlband gebildeten Grundschicht ebenso sicher gewährleistet ist. Besonders günstig erweist sich dies, wenn die Zwischenschicht durch PVD-Beschichten aufgetragen wird.

Nach dem Muster der bekannten Schmelztauchbeschichtung sollte die Glühbehandlung des in erfindungsgemäßer Weise beschichteten Stahlbands im Durchlauf erfolgen. Die Glüheinrichtung kann dabei Teil einer an sich bekannten Schmelztauchbeschichtungsanlage sein.

Die Glühung wird bevorzugt unter einer Schutzgasatmosphäre durchgeführt, um auch insoweit die Gefahr einer Oxidation auf ein Minimum zu reduzieren.

Abhängig von der zur Verfügung stehenden Anlagentechnik und der jeweils gewählten Glühtemperatur sollte die Glühzeit beim nach dem Auftragen der Zwischenschicht durchgeführten Glühen 30 sec bis 250 sec betragen, um den jeweils gewünschten Grad des Eindiffundierens von Fe des Stahlbands in die Beschichtung zu erzielen. Dies erweist sich insbesondere dann als günstig, wenn die Zwischerischicht durch PVD-Beschichten aufgebracht wird.

Im Hinblick auf den Korrosionsschutz und die Verschweißbarkeit besonders vorteilhaft wirkt sich die erfindungsgemäße Vorgehensweise aus, wenn die metallische, auf die erfindungsgemäße Al-Zwischenschicht aufgetragene Schmelzmetallschicht durch eine Al/Si-Legierung, reines Al, reines Zink und/oder eine Zink-Legierung gebildet ist.

Eine weitere die Haftung der Al-Zwischenschicht auf dem Stahlband verbessernde Ausgestaltung der Erfindung ist dadurch gekennzeichnet, dass die Oberflächen des Stahlbands vor dem Auftrag der Al-Zwischenschicht gereinigt werden.

Nach dem Schmelzbeschichten kann in an sich bekannter Weise ein Dressieren durchgeführt werden, um die Oberflächenqualität und Rauhigkeit des beschichteten Bandes zu optimieren.

Nachfolgend wird die Erfindung anhand von ein Ausführungsbeispiel darstellenden Bildern näher erläutert. Es zeigen jeweils schematisch und ausschnittsweise:
- Fig. 1: eine in erfindungsgemäßer Weise beschichtete Stahlbandprobe in einer Schnittansicht;
- Fig. 2: die beschichtete Stahlbandprobe gemäß Fig. 1 in Draufsicht;
- Fig. 3: die in Fig. 1 dargestellte beschichtete Stahlbandprobe nach einem Kugelschlagtest nach Stahl Eisen Prüfblatt SEP 1931 in Draufsicht;
- Fig. 4: eine in konventioneller Weise schmelztauchbeschichtete Stahlbandprobe in Draufsicht.

Ein höherfester Stahl, der als hinsichtlich seiner Eigenschaften wesentliche Elemente neben Eisen und unvermeidbaren Verunreinigungen (in Gew.-%) 20 % Mn, 2,7 % Al und 2,7 % Si enthielt, ist zu Brammen vergossen und in konventioneller Weise zu Warmband fertig gewalzt und anschließend gehaspelt worden. Das erhaltene Warmband besaß eine Zugfestigkeit Rₘ von 720 MPa und eine Dehnung A80 von 60 %.

Das so erhaltene Warmband ist anschließend in einer ersten Stufe mit einem Umformgrad von 30 % zu Kaltband kaltgewalzt worden. Daran schloss sich eine Zwischenglühung des Kaltbands an, die bei 900 °C durchgeführt worden ist. Nach der Zwischenglühung ist das so erhaltene Stahlband S in einer weiteren Stufe bei einem Umformgrad von 40 % auf Enddicke kaltgewalzt worden.

Nach dem Kaltwalzen ist die Oberfläche des Kaltbands nasschemisch gereinigt worden, bevor es in eine PVD-Beschichtungsanlage eingelaufen ist.

In der PVD-Beschichtungsanlage ist eine 0,5 µm dicke Al-Schicht auf das Stahlband S aufgebracht worden, indem unter Vakuum ein aluminiumhaltiger Dampf auf die Oberflächen des Stahlbands S gerichtet und dort abgeschieden worden ist.

Nach dem PVD-Beschichten des Bandes mit der Al-Schicht ist das Band in einer Durchlaufglühanlage bei 800 °C bei einer Durchlaufzeit von 60 Sekunden unter einer aus 5 % H₂, Rest N₂ bestehenden Schutzgasatmosphäre geglüht worden. Noch im Durchlaufglühofen und nach wie vor unter der Schutzgasatmosphäre erfolgte nach dieser ersten Phase der Glühung eine Abkühlung auf eine Temperatur von 660 °C, mit der das Stahlband S in ein aus einer Aluminium-Silizium-Legierung gebildetes Schmelztauchbad eingelaufen ist.

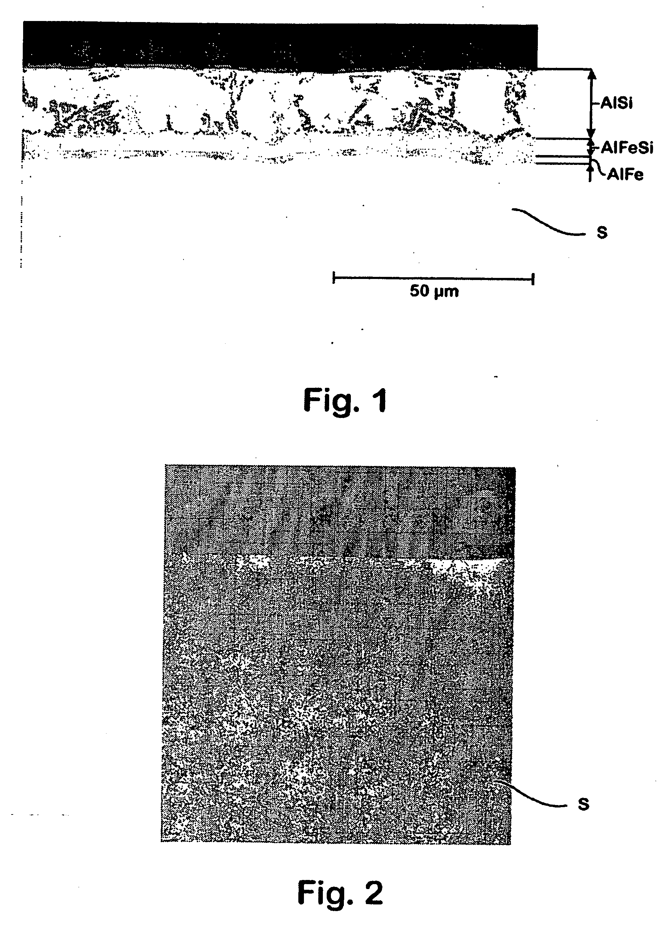

Im Zuge der Glühbehandlung ist Eisen des Stahlwerkstoffs des Stahlbands S in die auf die Oberfläche per PVD-Beschichtung aufgetragene Al-Schicht eindiffundiert, so dass eine im Wesentlichen aus Al und Fe bestehende Schicht AlFe entstand, die stoffschlüssig mit dem Stahlband S verbunden war und fest auf diesem haftete (Fig. 1).

Im Schmelztauchbad ist das die AlFe-Schicht tragende Stahlband S mit einer AlSi-Schicht belegt worden. Durch im Zuge der Schmelztauchbeschichtung eintretende Diffusionsvorgänge hat sich dabei eine AlFeSi-Zwischenschicht gebildet, die im Wesentlichen aus Al, Fe und Si besteht. Die Dicke dieser AlFeSi-Zwischenschicht ist größer als die Dicke der unmittelbar auf der Oberfläche des Stahlbands S haftenden AlFe-Schicht, jedoch deutlich kleiner als die Dicke der außen liegenden, im Wesentlichen aus Al und Si bestehenden AlSi-Schicht (Fig. 1).

Nach dem Herausziehen des derart beschichteten Stahlbands S aus dem Schmelztauchbad ist die Dicke der Beschichtung in bekannter Weise mittels eines Düsenabstreifsystems eingestellt worden. Anschließend ist das beschichtete Stahlband S abgekühlt und einem Nachwalzen unterzogen worden, um seine Oberflächenbeschaffenheit zu optimieren. Das erhaltene beschichtete Stahlband S ist dann eingeölt und zu einem versandfertigen Coil gehaspelt worden.

Fig. 2 zeigt in Draufsicht einen Ausschnitt des in der voranstehend erläuterten, erfindungsgemäßen Weise beschichteten Stahlblechs. Der vollflächig dichte und gleichmäßige Auftrag der Beschichtung ist deutlich zu erkennen.

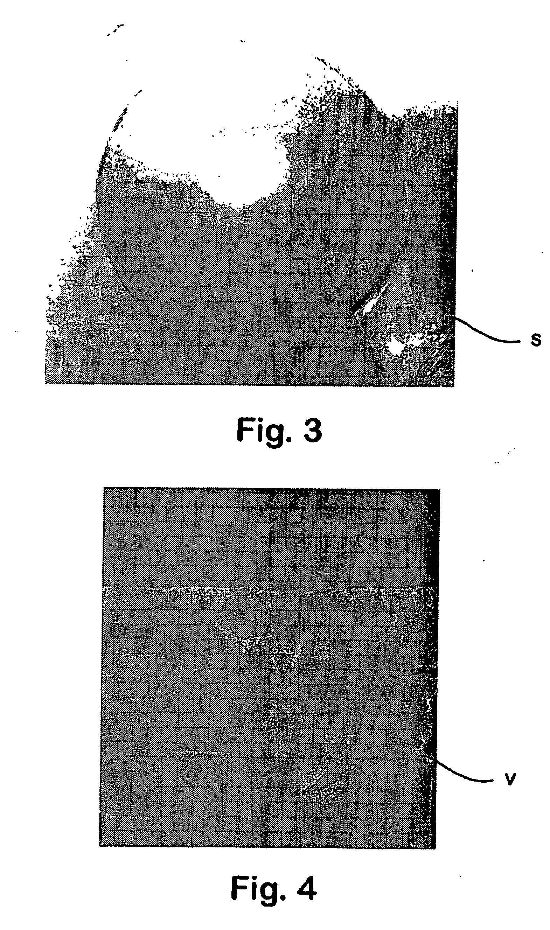

Fig. 3 zeigt schließlich das Ergebnis eines an dem Stahlblech S vorgenommenen Kugelschlagtests. Es belegt die sehr gute Haftung des aus den Schichten AlFe, AlFeSi und AlSi gebildeten Beschichtungsaufbaus auf dem Stahlband S. So sind keine Abplatzungen oder vergleichbare Beschädigungen zu erkennen.

Im Gegensatz dazu zeigt Fig. 4 zum Vergleich ein Stahlband V in Draufsicht, das genauso legiert ist wie das Stahlband S. Bis auf den Schritt des PVD-Auftrags der Al-Schicht ist es auch in derselben Weise verarbeitet worden wie das Stahlband S. Dabei geht aus Fig. 4 jedoch deutlich hervor, dass das Stahlband V nach Ende des Behandlungsprozesses fast keine Beschichtung aufweist.

## Patentansprüche

1. Verfahren zum Beschichten von Stahlbändern mit (in Gew.-%) C: ≤ 1,6 %, Mn: 6 - 30 %, Al: ≤ 10 %, Ni: ≤ 10 %, Cr:≤ 10 %, Si: ≤ 8 %, Cu: ≤3 %, Nb: ≤0,6 %, Ti: ≤ 0,3 %, V: ≤ 0,3 %, P: ≤ 0,1 %, B: ≤ 0,01 %, N: ≤ 1,0 %, Rest Eisen und unvermeidbare Verunreinigungen, bei dem das Stahlband einer letzten Glühung unterzogen und anschließend mit einem aus einem schmelzflüssigen Metall gebildeten Überzug beschichtet wird, **dadurch gekennzeichnet, dass** auf das Stahlband vor dem letzten Glühen eine Aluminiumschicht aufgetragen wird, auf die nach dem letzten Glühen der Überzug aufgebracht wird.

2. Verfahren nach Anspruch 1, **dadurch gekennzeichnet, dass** die Schichtdicke der Aluminiumschicht 50 nm bis 1000 nm beträgt.

3. Verfahren nach einem der voranstehenden Ansprüche,
**dadurch gekennzeichnet, dass** die Glühtemperatur beim nach dem Auftragen der Aluminiumschicht durchgeführten letzten Glühen mehr als 680 °C und höchstens 900 °C beträgt.

4. Verfahren nach einem der voranstehenden Ansprüche, **dadurch gekennzeichnet, dass** die Glühzeit beim letzten Glühen 30 Sekunden bis 250 Sekunden beträgt.

5. Verfahren nach einem der voranstehenden Ansprüche, **dadurch gekennzeichnet, dass** der Auftrag des schmelzflüssigen Metalls durch Schmelztauchbeschichten erfolgt.

6. Verfahren nach einem der voranstehenden Ansprüche, **dadurch gekennzeichnet, dass** das nach dem letzten Glühen aufgetragene schmelzflüssige Metall aus einer Al/Si-Legierung, aus Al und/oder aus Zink oder einer Zinklegierung besteht.

7. Verfahren nach einem der voranstehenden Ansprüche, **dadurch gekennzeichnet, dass** die Oberflächen des Stahlbands vor dem Auftrag des Überzugs gereinigt werden.

8. Verfahren nach einem der voranstehenden Ansprüche, **dadurch gekennzeichnet, dass** die Aluminiumschicht durch PVD-Beschichten aufgetragen wird.

9. Stahlband, das ein Stahl-Grundmaterial mit (in Gew.-%) C: ≤ 1,6 %, Mn: 6 - 30 %, Al: ≤ 10 %, Ni: ≤ 10 %, Cr: ≤ 10 %, Si: ≤ 8 %, Cu: ≤ 3 %, Nb: ≤0,6 %, Ti: ≤ 0,3 %, V: ≤ 0,3 %, P: ≤ 0,1 %, B: ≤ 0,01 %, N: ≤ 1,0 %, Rest Eisen und unvermeidbare Verunreinigungen und einen darauf aufgetragenen metallische Überzug aufweist, wobei zwischen dem Grundmaterial und dem Überzug eine Zwischenschicht vorhanden ist, die im Wesentlichen aus Al und Fe besteht, **dadurch gekennzeichnet, dass** das Stahlband durch Anwendung des gemäß einem der Ansprüche 1 bis 8 ausgebildeten Verfahrens hergestellt ist.

10. Stahlband nach Anspruch 9, **dadurch gekennzeichnet, dass** das Grundmaterial folgende Zusammensetzung aufweist (in Gew.-% :
C: ≤ 1,00 %,
Mn: 20,0 - 30,0 %,
Al: ≤ 0,5 %,
Si: ≤ 0,5 %,
B: ≤ 0,01 %,
Ni: ≤ 3,0 %,
Cr: ≤ 10,0 %,
Cu: ≤ 3,0 %,
N: < 0,6 %,
Nb: < 0,3 %,
Ti: < 0,3 %,
V: < 0,3 %,
P: < 0,1 %,
Rest Eisen und unvermeidbare Verunreinigungen.

11. Stahlband nach Anspruch 9 oder 10, **dadurch gekennzeichnet, dass** das Grundmaterial folgende Zusammensetzung aufweist (in Gew.-% :
C: ≤ 1,00 %,
Mn: 7,00 - 30,00 %,
Al: 1,00 - 10,00 %,
Si:>2,50 - 8,00 %,
mit Al-Gehalt + Si-Gehalt > 3,50 - 12,00 %,
B: < 0,01 %,
Ni: < 8,00 %,
Cu: < 3,00 %,
N: < 0,60 %,
Nb: < 0,30 %,
Ti: < 0,30 %,
V: < 0,30 %,
P: < 0,01 %,
Rest Eisen und unvermeidbare Verunreinigungen.

## Claims

1. Method for coating steel strips comprising in % by weight C: ≤ 1.6%, Mn: 6 - 30%, Al: ≤ 10%, Ni: ≤10%, Cr: ≤ 10%, Si: ≤ 8%, Cu: ≤ 3%, Nb: ≤ 0.6%, Ti: ≤ 0.3%, V: ≤ 0.3%, P: ≤0.1%, B: ≤ 0.01%, N: ≤ 1.0%, the rest being iron and unavoidable impurities, wherein the steel strip is subjected to final annealing and then coated with a coating consisting of a molten metal, **characterized in that** an aluminium layer is applied to the steel strip before final annealing, to which the coating is applied after final annealing.

2. Method according to Claim 1, **characterized in that** the thickness of the aluminium layer is 50 nm to 1,000 nm.

3. Method according to any one of the preceding claims, **characterized in that** the annealing temperature during final annealing performed after application of the aluminium layer, is more than 680°C and maximum 900°C.

4. Method according to any one of the preceding claims, **characterized in that** the annealing time during final annealing is 30 seconds to 250 seconds.

5. Method according to any one of the preceding claims, **characterized in that** the molten metal is applied by hot dip coating.

6. Method according to any one of the preceding claims, **characterized in that** the molten metal, applied after final annealing, consists of an Al/Si alloy, Al and/or zinc or a zinc alloy.

7. Method according to any one of the preceding claims, **characterized in that** the surfaces of the steel strip are cleaned prior to application of the coating.

8. Method according to any one of the preceding claims, **characterized in that** the aluminium layer is applied by PVD coating.

9. Steel strip, which has a steel base material, comprising in % by weight C: ≤ 1.6%, Mn: 6 - 30%, Al: ≤ 10%, Ni: ≤ 10%, Cr: ≤ 10%, Si: ≤ 8%, Cu: ≤ 3%, Nb: ≤ 0.6%, Ti: ≤ 0.3%, V: ≤ 0.3%, P: ≤ 0.1%, B: ≤ 0.01%, N: ≤ 1.0%, the rest being iron and unavoidable impurities, and a metallic coating applied thereto, wherein an intermediate layer, which substantially consists of Al and Fe, is present between the base material and the coating, **characterized in that** the steel strip is produced by application of the method according to any one of the claims 1 to 8.

10. Steel strip according to Claim 9, **characterized in that** the base material has the following composition in % by weight:
C: ≤ 1.00%,
Mn: 20.0 - 30.0%,
Al: ≤ 0.5%,
Si: ≤ 0.5%,
B: ≤0.01%,
Ni: ≤ 3.0%,
Cr: ≤ 10.0%,
Cu: ≤ 3.0%,
N: < 0.60,
Nb: < 0.3%,
Ti: < 0.30,
V: < 0.3%,
P: < 0.1%,
the rest being iron and unavoidable impurities.

11. Steel strip according to Claim 9 or 10, **characterized in that** the base material has the following composition in % by weight:
C: ≤ 1.00%,
Mn: 7.00 - 30.00%,
Al: 1.00 - 10.00%,
Si: > 2.50 - 8.00%,
with Al + Si contents > 3.50 - 12.00%,
B: < 0.01%,
Ni: < 8.00%,
Cu: < 3.00%,
N: < 0.60%,
Nb: < 0.30%,
Ti: < 0.30%,
V: < 0.30%,
P: < 0.01%,
the rest being iron and unavoidable impurities.

## Revendications

1. Procédé pour le revêtement de rubans d'acier, avec (en % en poids) C: ≤ 1, 6 %, Mn: 6 - 30 %, Al: ≤ 10 %, Ni: ≤ 10 %, Cr: ≤ 10 %, Si: ≤ 8 %, Cu: ≤ 3 %, Nb: ≤ 0, 6 %, Ti: ≤ 0,3 %, V: ≤ 0,3 %, P: ≤ 0, 1 %, B: ≤ 0,01 %, N: ≤ 1,0 %, le reste étant du fer et des impuretés inévitables, dans lequel le ruban d'acier est soumis à un dernier recuit et pourvu ensuite d'un revêtement en métal en fusion, **caractérisé en ce que**, avant le dernier recuit, est appliquée une couche d'aluminium, sur laquelle le revêtement est appliqué après le dernier recuit.

2. Procédé selon la revendication 1, **caractérisé en ce que** l'épaisseur de la couche d'aluminium est de 50 nm à 1000 nm.

3. Procédé selon l'une des revendications précédentes, **caractérisé en ce que** la température de recuit est supérieure à 680 °C, mais n'est pas supérieure à 900 °C, lors du dernier recuit, qui est exécuté après l'application de la couche d'aluminium.

4. Procédé selon l'une des revendications précédentes, **caractérisé en ce que** la durée de recuit est de 30 à 250 secondes lors du dernier recuit.

5. Procédé selon l'une des revendications précédentes, **caractérisé en ce que** l'application du métal en fusion est effectuée par immersion à chaud.

6. Procédé selon l'une des revendications précédentes, **caractérisé en ce que** le métal en fusion, qui est appliqué après le dernier recuit, consiste en un alliage al/Si, en aluminium et / ou en zinc ou en alliage de zinc.

7. Procédé selon l'une des revendications précédentes, **caractérisé en ce que** les surfaces du ruban d'acier sont nettoyées avant l'application du revêtement.

8. Procédé selon l'une des revendications précédentes, **caractérisé en ce que** la couche d'aluminium est appliquée selon le principe de revêtement PVD.

9. Ruban d'acier, qui présente une matière de base d'acier avec (en % en poids) C: ≤ 1,6 %, Mn: 6 - 30 %, Al: ≤ 10 %, Ni: ≤ 10 %, Cr: ≤ 10 %, Si: ≤ 8 %, Cu: ≤ 3 %, Nb: ≤ 0,6 %, Ti: ≤ 0, 3 %, V: ≤ 0,3 %, P: ≤ 0, 1 %, B: ≤ 0,01 %, N: ≤ 1,0 %, le reste étant du fer et des impuretés inévitables, et, appliqué sur celle-ci, un revêtement métallique, où entre la matière de base et le revêtement, est prévue une couche intermédiaire, qui consiste essentiellement en Al et en Fe, **caractérisé en ce que**, le ruban d'acier est fabriqué en utilisant le procédé selon l'une des revendications 1 à 8.

10. Ruban d'acier selon la revendication 9, **caractérisé en ce que** la matière de base présente la composition suivante (en % en poids) :
C: ≤ 1,00 %,
Mn: 20,0 - 30,0 %,
Al: ≤ 0,5 %,
Si: ≤ 0,5 %,
B: ≤ 0,01 %,
Ni: ≤ 3,0 %,
Cr: ≤ 10,0 %,
Cu: ≤ 3,0 %,
N: < 0,6 %,
Nb: < 0,3 %,
Ti: < 0,3 %,
V: < 0,3 %,
P: < 0,1 %,
le reste étant du fer et des impuretés inévitables.

11. Ruban d'acier selon la revendication 9 ou 10, **caractérisé en ce que** la matière de base présente la composition suivante (en % en poids) :
C: ≤ 1,00 %,
Mn: 7,0 - 30,00 %,
Al: 1,0 - 10,00 %,
Si: >2,50 - 8,00 %,
avec teneur en Al + teneur en Si > 3,50 - 12,00 %
B: < 0,01 %,
Ni: < 8,00 %,
Cu: < 3,00 %,
N: < 0,60 %,
Nb: < 0,30 %,
Ti: < 0,30 %,
V: < 0,30 %,
P: < 0,01 %,
le reste étant du fer et des impuretés inévitables.
